# EUROPEAN PATENT APPLICATION

(11) **EP 2 246 933 A1**
(43) Date of publication of application: **03.11.2010**
(21) Application number: 10159832.4
(22) Date of filing: 13.04.2010
(51) Int. Cl.: H01Q 3/02, G01C 21/20, G01S 13/95

(54) **Self-stabilizing antenna base**

(30) Priority: 27.04.2009 US 430685
(71) Applicant: Honeywell International Inc., Morristown, NJ 07962 (US)
(72) Inventor: Gibson, Timothy, Morristown, NJ 07962-2245 (US); Tyner, Gene Monte, Morristown, NJ 07962-2245 (US); Crawford, Tom Alan, Morristown, NJ 07962-2245 (US)
(74) Representative: Buckley, Guy Julian

(57) **Abstract**

An antenna device (18) with a system for automatic stabilization and positioning control. The antenna device incorporates micro-electromechanical (MEMs)-based accelerometer and gyroscopic integrated circuit (IC) sensors (26) directly into the antenna base (20) in a vehicle-mounted antenna application. The sensors enable the antenna device to automatically stabilize the antenna (22) to achieve a desired beam sweep region, independent of vehicle movement, without requiring external sensor input. The invention eliminates the need for a communication interface to externally mounted orientation sensors, reduces cable I/O, and eases the installation procedure.

## Description

### BACKGROUND OF THE INVENTION

A vehicle-mounted antenna typically requires stabilization in order to keep the antenna device facing a specified direction, or tracing a specified sweep region, independent of the movements of the vehicle on which it is mounted. This requirement dictates that such an antenna receive input from at least one orientation sensor, so that the antenna can respond to changes in vehicle orientation.

Orientation sensors often consist of some combination of accelerometers and gyroscopes. Due to size and weight constraints, these sensing devices are typically mounted on the vehicle in a location physically remote from the antenna unit itself. As a result, typically there must be a physical electrical connection and coordinated communication protocol between the orientation sensors and the antenna to convey to the antenna unit orientation information.

There are several negative consequences of this design. One is the need to match the communication protocols of the antenna and the orientation sensors. Because at the time of design and manufacture it is not necessarily known to what orientation sensors the antenna will be connected, antennas are often designed to accept many different communication protocols. This adds to unit complexity and design/development costs.

A second consequence is the need to match the physical I/O port. This requirement dictates that antennas be built either to accept multiple I/O port configurations, or be restricted in the number of orientation sensors with which the antenna can be used.

Finally, having the antenna and the orientation sensors physically separated means that a precise calibration must occur during their installation in order to ensure that the antenna base and the vehicle share the same orientation.

### SUMMARY OF THE INVENTION

An antenna device with a system for automatic stabilization and positioning control is disclosed. The antenna device incorporates micro-electromechanical sensor (MEMs)-based accelerometer and gyroscopic integrated circuit (IC) sensors directly into the antenna base in a vehicle-mounted antenna application. The sensors enable the antenna device to automatically stabilize the antenna to achieve a desired beam sweep region, independent of vehicle movement, without requiring external orientation sensor input.

The invention takes advantage of the increasing capability and decreasing size and cost of MEMS devices. In the specific application of a weather radar antenna mounted in an aircraft, the MEMS devices enable orientation sensors integral with the antenna, with the effect of reducing communication protocol complexity, reducing wiring and physical interfaces, and simplifying antenna installation.

### BRIEF DESCRIPTION OF THE DRAWINGS

Preferred and alternative embodiments of the present invention are described in detail below with reference to the following drawings:

FIGURE 1 illustrates a partial x-ray view of an aircraft having a self-stabilizing antenna formed in accordance with an embodiment of the present invention;

FIGURE 2 illustrates a block diagram showing the components of a self-stabilizing antenna; and

FIGURE 3 is a perspective drawing illustrating a vehicle-mounted self-stabilizing weather radar antenna.

### DETAILED DESCRIPTION OF THE PREFERRED EMBODIMENT

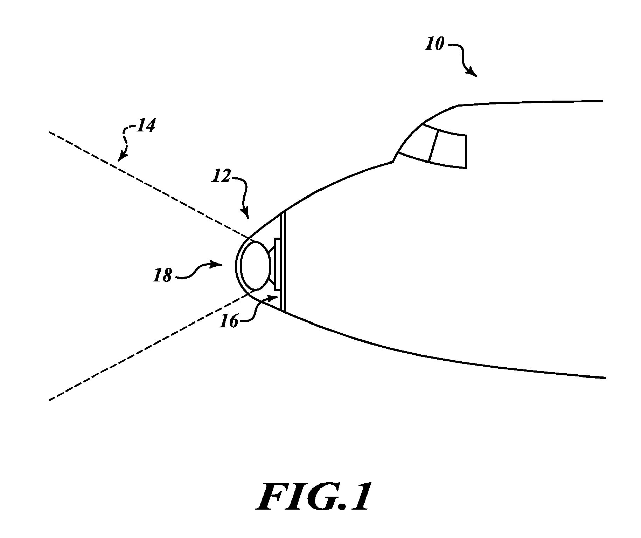

FIGURE 1 shows a vehicle 10 having a nose section 12 and a structural element 16. To the structural element 16 is fastened an antenna device 18 which during operation surveys a beam sweep region 14. Because electromagnetic radiation can penetrate physical bodies, the structural element 16 and the mounting point of the antenna device 18 could occur at any point on or within the vehicle 10. The nose section 12 is just one of several convenient locations within vehicle 10 where the antenna device 18 could be conveniently mounted.

During a normal horizontal scanning process, the antenna device 18 seeks to maintain an orientation that maintains a specified beam sweep region 14. Because antenna device 18 is mounted to structural element 16, and therefore fastened to vehicle 10, when the orientation of vehicle 10 changes, so does the beam sweep region 14 from which the antenna device 18 collects electromagnetic fields. This consequence leads to the need for stabilization of the antenna device 18.

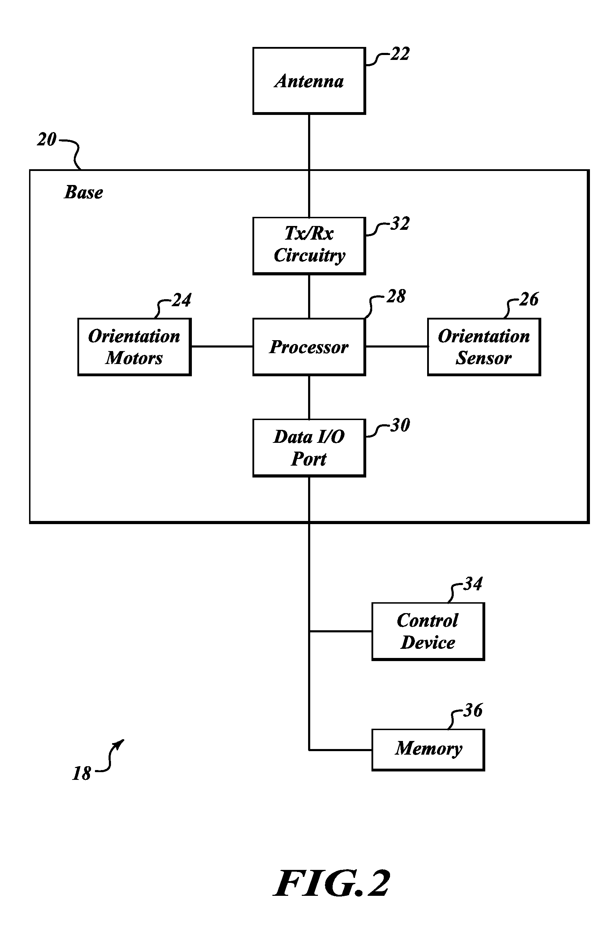

FIGURE 2 shows the relationship between functional components of the antenna device 18. The antenna device 18 includes a base 20, an antenna 22, a control device 34 and a display memory device 36. Within base 20 are orientation motors 24, micro-electromechanical sensor (MEMS)-based orientation sensors 26, a processor 28, a data input/output port 30 and a transmit/receive circuit 32.

The base 20 serves as both a mechanical and electrical connection point between the antenna 22 and the remotely located control device 34 and display memory 36. Mechanically, referring back to FIGURE 1, the base 20 is fixed to the structural element 16, and therefore to the rest of the vehicle 10. In FIGURE 2, the antenna 22 is connected to the base 20 through mechanical linkages (not shown) at the orientation motors 24. The MEMs-based orientation sensors 26 are mechanically referenced to the orientation motors 24 through their common mounting point, base 20.

The antenna 22 is in signal communication with the processor 28 through transmit/receive circuitry 32. The control device 34 and display memory 36 are in signal communication with the processor 28 through the data input/output port 30. Both the orientation motors 24 and the MEMS-based orientation sensors 26 are in direct, signal communication with the processor 28.

In operation, specification of the desired sweep region 14 (i.e. a directional signal) is conveyed to the processor 28 from the control device 34 through the data input/output port 30. But because the base 20 is connected through the structural element 16 to the vehicle 10, as the vehicle 10 travels through space the orientation of the antenna 22 varies in terms of roll and pitch. By its mechanical connection to the base 20, the MEMS-based orientation sensors 26 measure the parameters of roll and pitch experienced by the base 20 (i.e., the vehicle 10 (e.g., aircraft)), and continuously feeds the results of these measurements to the processor 28. The processor 28 receives the specification of the desired beam sweep region 14 from the control device 34 and the measurements of roll and pitch from the orientation sensors 26. In the processor 28, the measurements of roll and pitch from the orientation sensors 26 are factored into the specification of the desired beam sweep region 14 from the control device 34 and are forwarded to the orientation motors 24. Through conventional mechanical linkage (not shown) the orientation motors 24 direct the antenna 22 to achieve the beam sweep region 14 specified at the control device 34 despite changes in the orientation of the base 20 to which it is mounted. For the desired beam sweep region 14, the antenna 22 captures and collects the desired electromagnetic radiation field and passes it through the transmit/receive circuitry 32 to the processor 28, and from there through the data input/output port 30 to the display memory 36.

In other words, the processor 28 has knowledge of the antenna position in the horizontal scan plane as part of the horizontal scan drive processing. In the processor 28, measurements of roll and pitch from the orientation sensors 26 and the position within the horizontal scan are factored with the scan elevation specified by the control device 34 to provide a pitch and/or roll compensated modification to accomplish the desired beam sweep region 14.

In one embodiment, the base 20, the antenna 22, the control device 34, and the display memory 36 make up an aircraft-mounted weather-radar antenna device 18. The vehicle 10 is an aircraft with the antenna device 18 mounted to the structural element 16 in the nose section 12. The vehicle 10 passes through the atmosphere with the antenna 22 directed outward from the nose section 12 to establish the desired beam sweep region 14. Information about the weather is collected by the antenna 22 and passed through the transmit/receive circuit 32 to the processor 28. As vehicle attitude changes, the MEMS-based orientation sensors 26 measure the deviation from a previous orientation, and transmit the difference in orientation between the old and new orientations back to the processor 28. The processor 28 passes this new orientation information to the orientation motors 24, which respond mechanically to adjust the antenna 22 in order to maintain the beam sweep region 14 specified at the control device 34.

Orientation adjustments of the antenna 22 due to movements in the vehicle 10 are achieved without any input from outside the base 20 once specification of the desired beam sweep region 14 is received from the control device 34. There is no requirement for input to the orientation measurements from orientation sensors external to the antenna device 18. This simplifies the cabling and physical interface requirements at the data input/output port 30.

Integration of the MEMS-based orientation sensors 26 within the base 20 eliminates the requirement for multiple communication protocols to be installed in the processor 28. This is a step forward from current antenna device processors, which must be configured with a variety of communication protocols in order to accommodate the range of orientation sensors to which they could be connected, or are limited in the orientation sensors with which the antenna device can be used.

Integration of the MEMS-based orientation sensors 26 within the base 20 also eliminates a previously required calibration at the time of installation. The calibration requirement comes from the need for: (1) the antenna base 20 and the vehicle 10 to share the same orientation coordinates, so that the output of the heretofore remotely located orientations sensors is meaningful to the antenna base 20, and (2) the orientation motors 24 and the vehicle 10 to share the same orientation coordinates, so that the orientation of the beam sweep region 14 corresponds with the vehicle 10 orientation. The benefit of integrating the orientation sensors 26 into the base 20 is that the first calibration requirement is entirely eliminated, and the second calibration requirement can be satisfied by a factory calibration, rather than one at the time of antenna device 18 installation.

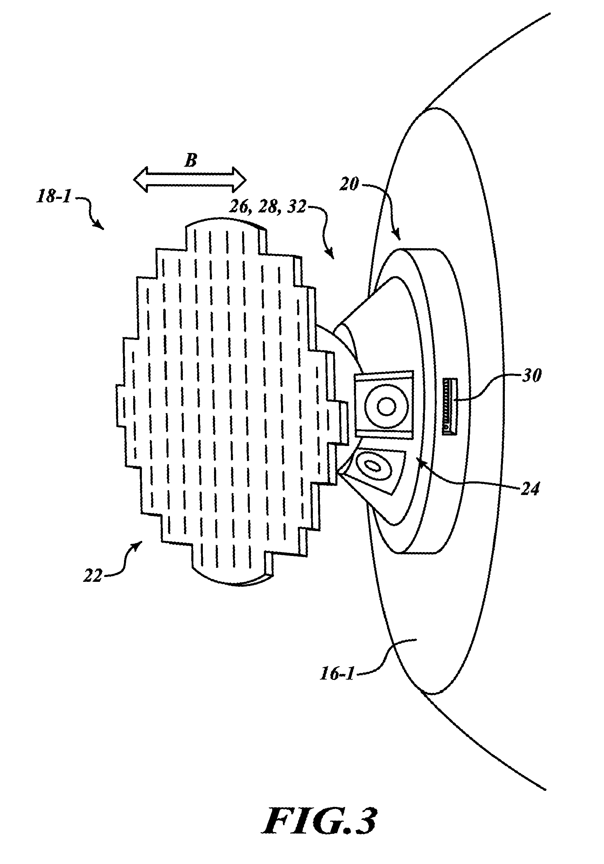

FIGURE 3 shows an embodiment of an antenna device 18-1 mounted to a bulkhead 16-1 of a nose cone section of an aircraft. The base 20 is mounted to the structural element 16 and the antenna 22 is connected to the base 20 through a linkage (not specifically shown) to the orientation motors 24. Within the base 20 are the orientation motors 24, the MEMS-based orientation sensors 26, the processor 28, the data input/output port 30 and the transmit/receive circuitry 32. The orientation motors 24, the MEMS-based orientation sensors 26, the processor 28, the data input/output port 30 and the transmit/receive circuitry 32 are all integrated within the base 20.

FIGURE 3 also shows that the base 20 exists as a common mechanical reference point for both the orientation motors 24 and the MEMS-based orientation sensors 26. This enables these two components to be factory calibrated to one another, a periphery benefit to the invention of the self-stabilizing antenna device 18. FIGURE 3 also shows the compact data input/output port 30 which contains no I/O pins for the orientation sensors 26, because the orientation sensors 26 are integrated into the base 20 with the processor 28. This reduces the cable count in the data input/output port 30, which now requires pins for connection only to the control device 34 and display memory 36. Not visible in FIGURE 3 is the simplification of the processor 28 due to the elimination of multiple communication protocols for communicating between the orientation sensors 26 and the processor 28.

In one embodiment, the MEMS accelerometers and MEMS gyroscopes are made by Honeywell, Inc., including the Air Data Attitude Heading Reference System (ADAHRS) used in the Apex integrated cockpit. In alternative embodiments, commercial off-the-shelf suppliers of MEMS accelerometers and MEMS gyroscopes are used.

In embodiments requiring extreme accuracy, the orientation sensors 26 include up to three rotational (gyroscopic) MEMS integrated circuits and four accelerometer integrated circuits (IC's). Accelerometer IC packages exist that measure three axes in one package, and since antenna stabilization typically must account for only two axes of rotation, it is conceivable that self-stabilization could be accomplished with as few as three ICs (one three-axis accelerometer MEMS IC and two one-axis rotational MEMS ICs). In one embodiment, a three-axis accelerometer MEMS IC and two one-axis rotational MEMS ICs package is installed in the antenna base 20. Using one of a number of accepted communication protocols, each IC package transmits orientation data to the processor 28. Based on the received orientation data, and the specified beam sweep region 14 from the control device 34, the processor 28 commands the orientation motors 24 to adjust the antenna 22 to maintain the requested beam sweep region 14 independent of the orientation of the vehicle 10.

In another embodiment, the transmit/receive circuit 32 includes a transmitter and a receiver and the processor 28 includes a radar processor. The transmitter, receiver and radar processor may be similar to those provided in the RDR4000 weather radar system produced by Honeywell, Inc.

The present invention may also use alternatively fabricated orientation measurement sensors.
The embodiments of the invention in which an exclusive property or privilege is claimed are defined as follows:

## Claims

1. An antenna device (18) comprising:
an antenna (22); and
a base (20) comprising:
one or more antenna orientation motors (24); and
an orientation sensor (26).

2. The device in Claim 1, further comprising a control device (34) and a display memory (36), wherein the base further comprises a processor (28), a transmit/receive circuit (32), and a data input/output port (30).

3. The device of Claim 1, wherein the orientation sensor comprises an accelerometer or a gyroscope.

4. The device in Claim 3, wherein the antenna device is mounted on an aircraft.

5. The device in Claim 1, wherein the orientation sensor comprises a three-axis accelerometer MEMS IC and two single-axis rotational MEMS IC's or comprises up to three rotational MEMS integrated circuits and four accelerometer integrated circuits.

6. A method comprising:
receiving a directional signal at a processor included within a base portion of an antenna device;
receiving one or more position sensor signals at the processor from an orientation sensor included within the base portion of the antenna device;
generating one or more antenna position control signals based on the received one or more position sensor signals and the directional signal;
physically orienting the antenna based on generated one or more antenna position control signals.

7. The method of Claim 6, wherein the orientation sensor comprises at least one accelerometer or at least one gyroscope.

8. The method in Claim 7, wherein the accelerometer or the gyroscope comprises a micro-electromechanical (MEMS) fabricated integrated circuit sensor.

9. The method in Claim 6, wherein generating one or more antenna position control signals is further based on a pre-installation calibration of the antenna orientation to the base.
